# EUROPÄISCHE PATENTANMELDUNG

(11) **EP 3 075 788 A1**
(43) Veröffentlichungstag der Anmeldung: **05.10.2016**
(21) Anmeldenummer: 15162343.6
(22) Anmeldetag: 02.04.2015
(51) Int. Cl.: C09D 5/02, C09D 17/00, C08G 6/02, C09B 67/46, C09D 161/02, C08L 61/02, C08G 18/54

(54) **FUNKTIONALISIERTE KETON-ALDEHYD-KONDENSATIONSHARZE**

(71) Anmelder: Evonik Degussa GmbH, 45128 Essen (DE)
(72) Erfinder: Dürr, Christoph Jürgen, 46286 Dorsten (DE); Burian, Bettina, 46282 Dorsten (DE); Engelke, Daniel, 46286 Dorsten (DE); Ewald, Michael, 45768 Marl (DE); Jörres, Tanja, 46569 Hünxe (DE); Retzlaff, Erika, 45772 Marl (DE)

(57) **Zusammenfassung**

Die Erfindung betrifft funktionalisierte Keton-Aldehyd-Kondensationsharze, deren Herstellung und deren Verwendung.

## Beschreibung

Die Erfindung betrifft funktionalisierte Keton-Aldehyd-Kondensationsharze, deren Herstellung und deren Verwendung.

Es ist bekannt, dass Ketone oder Gemische aus Ketonen und Aldehyden in Gegenwart basischer Katalysatoren oder Säuren zu harzartigen Produkten umgesetzt werden können. So lassen sich aus Gemischen von Cyclohexanon und Methylcyclohexanon Harze herstellen. Die Reaktion von Ketonen und Aldehyden führt zumeist zu Hartharzen, die oft in der Lackindustrie Verwendung finden.

Technisch bedeutende Keton-Aldehydharze werden heute zumeist unter Verwendung von Formaldehyd hergestellt. Derartige Keton-Formaldehydharze sind bereits seit langem bekannt. Verfahren zu deren Herstellung sind beispielsweise in DE 33 24 287, US 2,540,885, US 2,540,886, DE 11 55 909, DE 13 00 256 und DE 12 56 898 beschrieben.

Zur Herstellung werden normalerweise Ketone und Formaldehyd in Gegenwart von Basen miteinander zur Reaktion gebracht.

Keton-Aldehydharze werden in Beschichtungsstoffen z. B. als filmbildende Zusatzkomponenten eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u. a. als filmbildende Funktionsfüllstoffe.

Die aus dem Stand der Technik bekannten Systeme haben den Nachteil, dass keine breite Einführung chemischer Funktionalitäten an den Harzkörper möglich ist. Harzgebundenen Hydroxy- oder Carboxyfunktionalitäten werden beispielsweise haftungsgebende Eigenschaften zugeschrieben. Harzgebundene Amine dagegen können durch ihre hohe Pigmentaffinität zu einer deutlichen Erhöhung der Farbstärke gegenüber Amin-freien Systemen führen. Der Nachteil bei der Herstellung funktionaler Harzsysteme ist, dass eine Funktionalisierung der Harze meist in mindestens einem weiteren, der eigentlichen Kondensationsreaktion nachgeschaltetem Schritt durchgeführt werden muss. Eine häufig verwendete Möglichkeit zur nachgeschalteten weiteren Umsetzung ist ein zweistufiges Verfahren, bei welchem zuerst die Keto-Gruppen typischer Keton-Aldehyd-Kondensationsharze durch Hydrierung in Hydroxy-Funktionalitäten umgewandelt werden. Im Anschluss kann dann eine Umsetzung der Hydroxygruppen mit entsprechend funktionalisierten reaktiven Komponenten durchgeführt werden. Als reaktive Komponenten eignen sich hier üblicherweise Verbindungen, die in dem Fachmann bekannter Weise mit OH-Funktionen reagieren können, wie Isocyanate, Carbodiimide, Carbonsäuren u.a.. Eine Route zur Herstellung Doppelbindungs-funktioneller Ketonharze ist beispielsweise in DE10338560 beschrieben. DE 102007018812 beschreibt ferner die Einführung von Polyethern in Keton-Aldehyd-Kondensationsharze, indem im Anschluss an eine Hydrierung der Keton-Aldehyd-Kondensationsharze eine Umsetzung der Carbonyl-hydrierten Keton-Aldehyd-Kondensationsharze mit Oxiranen durchgeführt wird.

Eine alternativ zur Funktionalisierung von Keton-Aldehyd-Kondensationsharzen verwendete Methode in einem Verfahrensschritt ist der Einbau chemischer Funktionalitäten in Keton-Aldehyd-Kondensationsharze über den Einsatz entsprechend funktionalisierter Ketone. Diese sind jedoch meist schwerer zugänglich als die entsprechend funktionalisierten Alkohole und meist höher in den Rohstoffkosten, was marktseitig oft unerwünscht ist.

Der vorliegenden Erfindung lag die Aufgabe zu Grunde, Keton-Aldehyd-Harze mit einem verbreiterten Anwendungsspektrum zur Verfügung zu stellen.

Dabei hat sich überraschenderweise gezeigt, dass eine gezielte Modifizierung von Keton-Aldehyd-Harzen möglich ist, wenn bei der Reaktion entsprechende Reaktionskomponenten anwesend sind und die entsprechenden Reaktionsbedingungen eingehalten werden.

Demgemäß sind Verfahren zur Herstellung funktionalisierter Harze umfassend die Kondensation von aliphatischen Ketonen und Aldehyden in Gegenwart mindestens eines Alkohols, wobei der Alkohol kovalent in das Harz eingebunden wird, ein erster Gegenstand der vorliegenden Erfindung.

Die Erfindung erlaubt die (in-situ) Funktionalisierung von Keton-Aldehyd-Harzen durch den Einsatz entsprechender Modifizierungsmittel, insbesondere durch den Einsatz von Alkoholen während der Synthese. Nach dem Stand der Technik werden Funktionalisierungen bisher in der Kondensation nachgeschalteten Schritten durchgeführt. Diese Schritte beinhalten z. B. eine Umsetzung von durch Hydrierung der Keto-Gruppen erhaltenen OH-Gruppen mit entsprechend funktionalisierten Isocyanaten. Die vorliegende Erfindung erlaubt demgegenüber eine Reduzierung der Verfahrensschritte gegenüber herkömmlichen Verfahren. Dies bringt dadurch weitere prozesstechnische Vorteile wie höhere Raum/Zeitausbeuten und auch anwendungstechnische Vorteile da neben der Art der einzuführenden Funktionalität auch die Menge gezielt auf die Anwendung abgestimmt werden kann.

Entgegen bisheriger Annahmen hat sich dabei überraschenderweise gezeigt, dass es sehr wohl möglich ist, weitere Bestandteile, insbesondere Alkohole, während der Synthese von Keton-Aldehyd-Kondensationsharzen in die Polymerkette einzubauen. Ohne daran gebunden zu sein, ist anzunehmen, dass der Einbau mechanistisch über eine Michael-Addition stattfindet. Die mechanistische Beschreibung ist dem Fachmann bekannt und findet sich in der einschlägigen Fachliteratur unter den Stichworten Aldolkondensation / Michael-Addition, so beispielsweise in Laue/Plagens, Named Organic Reactions, John Wiley & Sons, 2005, Edition 2, Seite 4 ff und Seite 201 ff. Durch die Kondensation von Keton und Formaldehyd gebildete Vinylketone bieten in alkalischer Umgebung die Möglichkeit zum Angriff einer OH-funktionalen Verbindung (hier gezeigt am Beispiel eines Methylisobutylketon-basierten Harzes):

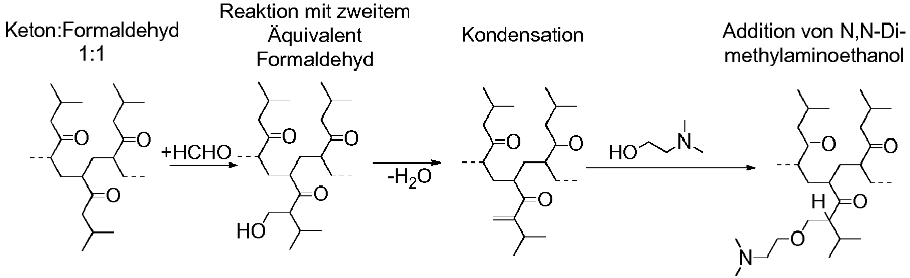

Durch den Einsatz entsprechend funktionalisierter Alkohole erlaubt die beschriebene Technologie somit die (in-situ) Funktionalisierung von Keton-Aldehyd-Harzen.

Als Aldehyde für die Herstellung der erfindungsgemäßen Kondensationsharze eignen sich unverzweigte oder verzweigte Aldehyde, vorzugsweise ausgewählt aus der Gruppe bestehend aus Formaldehyd, Acetaldehyd, n-Butyraldehyd und/oder iso-Butyraldehyd, Valerianaldehyd sowie Dodecanal oder Mischungen daraus. In einer besonders bevorzugten Ausführungsform ist Formaldehyd als Aldehyd in den erfindungsgemäßen Harzen enthalten, entweder allein oder in Mischungen mit den vorab genannten Aldehyden. Auch die Verwendung von Formaldehydkondensaten wie Trioxan oder Paraformaldehyd ist möglich, wobei der Einsatz von Paraformaldehyd bevorzugt ist. Das benötigte Formaldehyd kann beispielsweise auch als ca. 20 bis 40 Gew.-%-ige wässrige oder alkoholische (z. B. Methanol oder Butanol) Lösung eingesetzt werden. Im Rahmen der vorliegenden Erfindung können insbesondere auch unterschiedliche Formen an Formaldehyd eingesetzt werden, beispielweise eine Kombination aus Paraformaldehyd und einer Lösung.

Als Ketone zur Herstellung der erfindungsgemäßen Kondensationsharze eignen sich grundsätzlich alle aus der Literatur bekannten CH-aciden Ketone oder Mischungen daraus. Voraussetzung für die im erfindungsgemäßen Verfahren verwendbaren Ketone ist, dass eine Möglichkeit zur Anbindung an die bei der Kondensation aufgebaute Polymerkette sowie gleichzeitig eine Möglichkeit zur Reaktion mit z. B. Formaldehyd/Alkohol am selben Molekül gegeben ist. Das eingesetzte Keton sollte dabei dem Postulat der Michael Addition folgend, mindestens zwei, vorzugsweise mehr, CH-acide Protonen aufweisen. Dadurch wird erreicht, dass das Keton mindestens zweimal mit Formaldehyd reagieren kann. Bevorzugt weist das Keton auf einer Seite der Ketogruppe drei C-H-acide Protonen oder auf den zwei Seiten der Ketogruppe jeweils mindestens zwei C-H-acide Protonen auf.

Beispiele geeigneter Ketone sind Aceton, Acetophenon, ortho-, meta oder para-Phenylacetophenon, Methylethylketon, 3-Pentanon, 2-Heptanon, 3-Heptanon, 4-Heptanon, 2-Oktanon, 3-Oktanon, 2-Undecanon, 5-Methylhexan-2-on (Methylisoamylketon) oder 4-Methylpentan-2-on (Methylisobutylketon), Cyclopentanon, Cyclododecanon, Mischungen aus 2,2,4- und 2,4,4-Trimethylcyclopentanon, Cycloheptanon, Cyclooctanon, Cyclohexanon, o-, m- oder p-Methoxyacetophenon, o-, m- oder p-[*N,N*-Dialkylaminophenyl]ethanon, Rheosmin, 4-(4-Hydroxy-3-metoxyphenyl)-2-butanon, Lävulinsäure und deren Derivate sowie alkylsubstituierte Cyclohexanone, wie 4-tert.-Amylcyclohexanon, 2-sek. Butylcyclohexanon, 2-tert.-Butylcyclohexanon, 4-tert.-Butylcyclohexanon, 2-Methylcyclohexanon und 3,3,5- Trimethylcyclohexanon oder Dione, wie zum Beispiel Acetylaceton. Die genannten Ketone können auch als Mischungen vorliegen.

Außerdem können als Keton-Komponente auch die als Schiffsche Basen bezeichneten Addukte eingesetzt werden, die aus der Reaktion von Ketonen und primären Aminen erhalten werden. Die eingesetzten primären Amine können selbst weitere organische Reste oder Funktionalitäten wie beispielsweise Amine enthalten. Derartige Verbindungen sind beispielsweise in US7723493 oder WO2012020028 beschrieben.

Insbesondere bevorzugt sind die Ketone ausgewählt aus der Gruppe bestehend aus Aceton, Methylethylketon, 2-Heptanon, 3-Heptanon, 4-Heptanon, 2-Oktanon, 3-Oktanon, 2-Undecanon, 5-Methylhexan-2-on (Methylisoamylketon) oder 4-Methylpentan-2-on (Methylisobutylketon) oder Mischungen daraus.

Im Rahmen der vorliegenden Erfindung hat sich gezeigt, dass prinzipiell ein sich am Polymerkettenende befindliches Keton ausreicht um eine einfache Funktionalisierung (eine Funktionalität pro Kettenende) zu erreichen, nachfolgend dargestellt am Beispiel eines Formaldehyd/Acetophenon-Harzes:

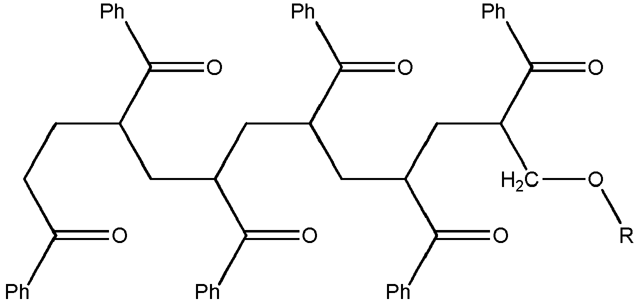

Im Falle von z. B. 4-Methylpentan-2-on (Methylisobutylketon) ist dagegen die Funktionalisierung auch entlang der Polymerkette, und damit nicht nur an den Kettenenden möglich:

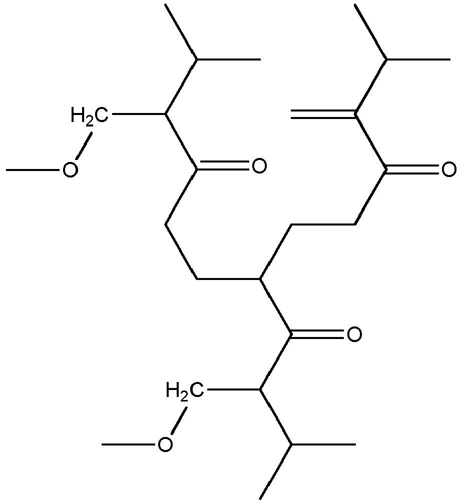

Das Verfahren der vorliegenden Erfindung erlaubt somit eine individuelle und den Bedürfnissen an das Produkt angepasste Funktionalisierung. So lässt sich je nach Wahl der eingesetzten Komponenten eine Funktionalisierung an den Kettenenden und/oder entlang der Polymerkette erzielen. Soll bei dem erfindungsgemäßen Verfahren neben der Funktionalisierung entlang der Polymerkette gleichzeitig ein Molekulargewichtsaufbau erreicht werden, werden vorzugsweise überstöchiometrische Mengen an Aldehyd, insbesondere an Formaldehyd, in dem erfindungsgemäßen Verfahren eingesetzt.

Der Bereich für das molare Aldehyd- zu Keton-Verhältnis liegt im Rahmen der vorliegenden Erfindung in der Regel im Bereich von 1:1 bis 3,5:1, bevorzugt im Bereich von 1,1:1 bis 2,5:1.

Bei der Synthese der Keton-Aldehyd-Harze kann als weitere Komponente auch Harnstoff und/oder dessen Derivate als Komponente eingesetzt werden, so dass funktionalisierte Keton-Aldehyd-Harnstoff-Harze erhalten werden.

Weiterer wesentlicher Bestandteil in dem erfindungsgemäßen Verfahren sind die während der Kondensation und zur Funktionalisierung der Keton-Aldehyd-Harze eingesetzten Alkohole. Unter Alkoholen im Sinne der vorliegenden Erfindung werden alle Verbindungen verstanden, die mindestens eine OH-Gruppe aufweisen, wobei nieder- als auch hochmolekulare Verbindungen geeignet sind.

Insbesondere geeignet sind gesättigte oder ungesättigte aliphatische oder cycloaliphatische sowie aromatische Mono-, Di- oder Polyole. Im Falle von Polyolen mit n OH-Gruppen können 0 bis n-1 der OH-Gruppen zur Derivatisierung verwendet werden oder bereits derivatisiert vorliegen, z. B. durch Umsetzung mit Isocyanaten, Carbonsäuren oder deren Derivate.

Darüber hinaus eignen sich lineare oder verzweigte OH-funktionale (Bio-)Polymere, beispielsweise lineare oder verzweigte OH-Gruppen aufweisende Polyester, Polyether, Polyurethane, Polyacrylate, Polymethacrylate, Polyvinylalkohole, Poly(butadiene), funktionalisierte Silikonharze, (organofunktionalisierte) Siloxane, Kohlenhydrate bzw. Zucker.

Beispiele aliphatischer und cycloaliphatischer Alkohole sind insbesondere Methanol, Ethanol, Propanol, Isopropanol, Butanol, 2-Butanol, Isobutanol, Tertiärbutanol, 1-Pentanol, 2-Pentanol, 2-Hexanol, Tert-Amylalkohol, Cyclohexanol, Methoxycyclohexanol, 1-Phenylethanol, Glycerincarbonat.

Beispiele ungesättigter Alkohole sind insbesondere Allylalkohol, Vinylalkohol, 2-Allyloxyethanol, Hexenole (z. B. 2-Hexen-1-ol, 3-Hexen-1-ol), Prenol, 2-Buten-1,4-diol, Sorbinalkohol, Propargylalkohol, 2-Butin-1,4-diol, 3-Hexin-2,5-diol, 1-Ethinyl-1-cyclohexanol, 2-Methyl-3-butin-2-ol, 3-Butin-2-ol oder 4-Ethyl-1-octin-3-ol.

Beispiele aromatischer Alkohole sind insbesondere Phenole, Catechole, Pyrogallol und deren Derivate bzw. Hydrochinon.

Ethylenglykol, 1,3-Propylenglykol, 1,2-Propylenglykol, 1,2-Pentandiol, 1,4-Butandiol, 1,5-Pentandiol, 2,5-Dimethyl-2,5-hexanediol, Butan-2,3-diol, 1,6-Hexandiol (HDO® der Firma BASF SE), Hydropivalsäure-neopentylglykolester, Neopentylglykol, 2,2,4-Trimethyl-1,3-Pentandiol, Cyclohexandimethanol, 3-Hydroxy-2,2-Dimethylpropyl 3-Hydroxy-2,2-Dimethylpropanoat, Hydrochinon, 1,4-Benzoldimethanol, Bisphenole aber auch Trimethylolpropan, Glycerin, Di-Trimethylolpropan, Pentaerythrit, 2,2,6,6-Tetrakis(hydroxymethyl)-4-oxaheptan-1,7-diol, 2,2-Bis[[3- hydroxy-2,2-bis(hydroxymethyl)propoxy]methyl]-1,3-propandiol, Oligo- oder Polyglycerin sind Beispiele geeigneter Diole oder Polyole sowie sämtliche von den Diol-/Polyol abgeleiteten Derivate wie beispielsweise Estern / Ethern / Urethanen.

Im Falle von linearen oder verzweigten OH-Gruppen aufweisenden Polyestern können diese gesättigt oder ungesättigt sein und auf aliphatischen, cycloaliphatischen und/oder aromatischen Ausgangsbestandteilen basieren. Auch sind Mischsysteme jeglicher Verhältnisse möglich.

Polyether sind kommerziell in großer Vielfalt erhältlich, z. B. unter den Markennamen Pluriol^{®} (BASF SE) oder Polyglycol AM^{®} (Clariant).

Weiterhin eignen sich dendritische und verzweigte Polyole, z. B. des Typs Boltorn^{™} P500, Boltorn^{™} H2004 der Firma Perstorp oder verschiedene Capa^{™}-Typen der Firma Perstorp. Bevorzugte Polyether können einseitig, beidseitig oder im Falle von auf Glycerin gestarteten Polyethern dreiseitig OH-terminiert sein, bzw. mit mindestens einer OH-Funktionalität sowie weiterer Doppel- oder Mehrfachbindung ausgestattet sein. Auch können 1,4-Butindiol gestartete Polyether verwendet werden. Ferner ist es denkbar dass bei Polyetherdiolen und -triolen mindestens ein OH-Terminus selektiv mit einem Endverschluss versehen ist, so durch eine Methylierung, Veresterung oder durch ein Isocyanatendcapping.

Formel (I) beschreibt bevorzugte Polyether

R¹O(C₂H₄O)ₒ(C₂H₃(CH₃)O)ₚ(C₂H₃(C₂H₅)O)_{q}(C₂H₃(Ph)O)ᵣR² Formel (I)

mit
R¹ und R² unabhängig voneinander Wasserstoff oder gleiche oder verschiedene organische Reste, die wiederum eine OH-Funktionalität, Heteroatome und/oder Mehrfachbindungen enthalten können.
o = 0 bis 200, bevorzugt 0 bis 150, besonders bevorzugt 0 bis zu 100, insbesondere bevorzugt 0 bis zu 80,
p = 0 bis 200, bevorzugt 0 bis 150, besonders bevorzugt 0 bis 100, insbesondere bevorzugt 0 bis zu 80,
q = 0 bis 200, bevorzugt 0 bis 150, besonders bevorzugt 0 bis 100, insbesondere bevorzugt 0 bis zu 80,
r = 0 bis 200, bevorzugt 0 bis 150, besonders bevorzugt 0 bis 100, insbesondere bevorzugt 0 bis zu 80,
mit der Maßgabe, dass o+ p + q + r ≥ 2

Neben den auf der Polymerisation von Epoxiden basierenden Polyethern und der daraus resultierenden Vielfalt hinsichtlich Topologie und Monomerverteilung über die Polymerkette, eignen sich auch die durch die Ringöffnungspolymerisation von cyclischen Ethern wie beispielsweise den auf THF basierenden und kommerziell erhältlichen lineareren oder verzweigten OH-Gruppen aufweisenden Polyether wie z. B. PolyTHF^{®} 1000 oder PolyTHF^{®} 1000S, PolyTHF^{®} 1400, PolyTHF^{®} 1800, PolyTHF^{®} 2000, PolyTHF^{®} 2000 S, PolyTHF^{®} 250, PolyTHF^{®} 650 S (BASF SE).

Beispiele geeigneter linearer oder verzweigter OH-Gruppen aufweisende Polyurethane, welche auch als "thermoplastic polyurethanes" (TPU's) bezeichnet werden, sind kommerziell erhältlich unter anderem als Epamould, Epaline for extrusion, Epacol for adhesives, Pakoflex for Synthetic Leather (EPAFLEX), Elastollan (BASF SE & Elastogran), Pearlthane (Merquinsa, now part of Lubrizol), Desmopan (Bayer), Estane (Lubrizol), Pellethane (Lubrizol), New Power^{®} (New Power Industrial Ltd.), Irogran (Huntsman), Exelast EC (Shin-Etsu Polymer Europe B.V.), Laripur (COIM SpA), Avalon (Huntsman), Zythane (Alliance Polymers & Services)

Als Polyvinylalkohole eignen sich beispielsweise solche mit einem Neutralisationsgrad von 1-100% (bezogen auf die Herstellung aus Polyvinylacetat). Derartige Produkte sind beispielsweise kommerziell erhältlich unter dem Namen Alcotex (Firma Synthomer) oder Elvanol^{®} (DuPont^{™}).

Als Kohlenhydrate bzw. Zucker eignen sich insbesondere Saccharide und Polysaccharide, beispielsweise Glucose, Fructose, Stärke, Amylopektin, Amylose, Chitosan.

Weitere Beispiele geeigneter Alkohole in dem erfindungsgemäßen Verfahren sind Hydroxybutylvinylether und dessen Alkoxylate, OH-funktionale Acrylate, wie z. B. Hydroxyethylacrylat, Hydroxyethylmethacrylat, OH-funktionale Terpene, wie z. B. Citronellol, Dolichol, Phytol, Geraniol, Farnesol, Linalool, Bisabolol, aber auch Terpineole, aliphatische, cycloaliphatische oder aromatische OH-funktionale Halogenverbindungen, wie z. B. Ethylenchlorhydrin, 1-(Pyrid-3-yl)-2-chloroethanol, 2-Chloro-1-(3-chlorophenyl)-ethanol, 2-Chloro-1-(3-hydroxyphenyl)-ethanol, polyfluorierte Alkohole. Weiterhin eignen sich auch Schwefel-haltige Verbindungen, wie z. B. 2,2'-Thiobisethanol, Mercaptoethanol, aber auch Aminoalkohole und Derivate, z. B. Amide. Beispiele hierfür sind *N*,*N*-Dimethylaminoethanol (z. B. Lupragen^{®} N 101), Trimethylaminoethylethanolamin, 3-Dimethylaminopropan-1-ol, Butyldiethanolamin, Butylethanolamin, Dibutylethanolamin, Diethylethanolamin, Ethylethanolamin, Dimethylaminoethoxyethanol (von BASF SE unter dem Namen Lupragen^{®} N 107 vertrieben), Methyldiethanolamin, *N*,*N*-Dimethylisopropanolamin, *N*-Methylethanolamin, Diethanolamin, Triethanolamin, Diisopropanolamin, Triisopropanolamin, *N*-(2-Hydroxyethl)piperidin, Diisopropanol-p-toluidin, *N*,*N*-Di-(2-hydroxyethyl)anilin, *N*-(2-Hydroxyethyl)anilin, 2-(2-Aminoethoxy)ethanol, 3-Amino-1-propanol, 5-Amino-1-pentanol, Monoethanolamin, *N*-(2-Aminoethyl)ethanolamin, Isopropanolamin oder 2,2'-(Phenylamino)diethanol. Entsprechende cyclische Derivate sind insbesondere ausgewählt aus der Gruppe der Piperazine und Morpholine, wie z. B. 1-(2-Hydroxyethyl)piperazin oder 4-(2-Hydroxyethyl)morpholin. Zusätzlich eignen sich hydroxyhaltige Harnstoff-Derivate, z. B. N-(2-Hydroxyethyl)ethylenharnstoff oder Hydroxycarbamid.

Phosphorsäureester, die eine weitere freie OH Funktionalität aufweisen, stellen eine weitere Gruppe einsetzbarer Alkohole dar, so sind beispielsweise OH-funktionale Phosphor-Verbindungen gemäß der folgenden Struktur einsetzbar:

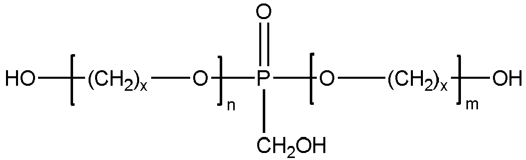

Derartige Phosphor-haltige Alkohole sind beispielsweise in DE 2532161 beschrieben. Als weiteres Beispiel ist das Phosphor-Polyol Exolit OP550 der Firma Clariant zu nennen. Organische Phorsphorsäureester, welche u.a. alkoxylierte Fettalkohole als Mono-/Diol-Komponente enthalten, werden auch unter dem Handelsnamen Silaphos^{®} (Schill+Seilacher GmbH) vertrieben und eignen sich u.a. zum Einsatz als Flammschutz- oder Netzmittel, Korrosionsinhibitor, Antistatikum oder Emulgator.

Weitere geeignete Alkohole sind auch Carboxylgruppen-haltige Verbindungen, beispielsweise aus der Gruppe der Hydroxycarbonsäuren, wie z. B. Milchsäure, 2-Hydroxymethylbuttersäure, 2-Hydroxymethylhexansäure, 2-Hydroxymethylpropansäure. Auch aromatische Vertreter wie Mandelsäure und deren Derivate (z. B p-Methylmandelsäure) oder Hydroxybenzoesäuren (z. B. Gallussäure) seien an dieser Stelle beispielhaft genannt.

Darüber hinaus eignen sich Hydroxy-haltige Aminosäuren, deren Salze sowie deren entsprechenden Ester oder Amide. Bei letzteren beiden kann eine Spaltung unter den basischen Bedingungen der Keton-Aldehyd-Kondensation stattfinden.

Des Weiteren eignen sich auch Alkoxylate der vorab genannten Alkohole. Alkoxylate der Alkohole können beispielsweise durch Umsetzung von Alkoholen mit Oxiranen oder Mischungen verschiedener Oxirane in Gegenwart basischer oder saurer Katalysatoren bzw. unter Zuhilfenahme von Doppelmetallcyanid-Katalysatoren erhalten werden. Als geeignete nichtfunktionelle Oxirane sind Ethylenoxid, Propylenoxid, Butylenoxid oder Styroloxid beispielhaft zu nennen, wohingegen als funktionelle Oxirane auch Glycidether wie der Allylglycidether (AGE), das Glycidyl(meth)acrylat oder die als Reaktivverdünner von der Firma ipox Chemicals GmbH vertriebenen (mono-) funktionellen Glycidether verwendbar sind. Ferner sind aber auch alkoxyfunktionelle Oxirane wie das Dynasylan^{®} GLYMO od. GLYEO bzw. chlormethylenfunktionelle Oxirane wie beispielsweise das Epichlorhydrin im Sinne einer Alkoxylierung unter den geeigneten katalytischen Bedingungen zu den entsprechenden Polyethern umsetzbar und im Sinne der Erfindung verwendbar.

In einer weiteren Ausführungsform des erfindungsgemäßen Verfahrens kann auch das Keton selbst OH-funktionalisiert sein, beispielsweise bei Einsatz von Hydroxyaceton. Alternativ kann die OH-Funktionalität bei der Durchführung der Reaktion freigesetzt werden, beispielsweise bei Einsatz von cyclischen Estern, beispielsweise Lactonen, die wiederum entlang des Kohlenstoffgerüstes funktionalisiert sein können. Dabei erfolgt in-situ eine Ringöffnung des Lactons und Angriff der OH-Funktionalität.

Weitere geeignete Alkohole basieren auf Nitro-Verbindungen, wie z. B. 1-(3-Nitrophenyl)propanol, oder Oximen, wie z. B. 1-Phenylethylhydroxylamin, aber auch aus Naturstoffen, beispielsweise Ascorbinsäure, Maltol, Kojisäure (aus Schimmelpilzen), Phytol (aus Chlorophyll), Terpenoide, Lignin, Ricinolsäure und deren Ester.

Auch organofunktionalisierte Siloxane, z. B. solche die mit einer Hydroxyalkylfunktionalität oder einer Polyethermodifikation ausgestattet sind, können als Alkohole im Sinne der vorliegenden Erfindung verstanden werden.

Derartige Siloxanpolymere sind erhältlich durch eine Umsetzung von Verbindungen der Formel (II)

MₐM^{H}_{b}D_{c}D^{H}_{d}TₑQ_{f} Formel (II)

mit
- M: = [R³₃SiO_{1/2}]
- M^{H}: = [R³₂SiHO_{1/2}]
- D: = [R³₂SiO_{2/2}]
- D^{H}: = [R³SiHO_{2/2}]
- T: = [R³SiO_{3/2}]
- Q: = [SiO_{4/2}]
- a: = 0 bis 50, bevorzugt 0 bis 20, insbesondere bevorzugt 0 bis 2,
- b: = 0 bis 50, bevorzugt 0 bis 20, insbesondere bevorzugt 0 bis 2,
- c: = 0 bis 600, bevorzugt 0 bis 400, mehr bevorzugt 0 bis 200, insbesondere bevorzugt 0 bis 80,
- d: = 0 bis 50, bevorzugt 0 bis 25, mehr bevorzugt 0 bis 15, insbesondere bevorzugt 0 bis 10,
- e: = 0 bis 30, bevorzugt 0 bis 20, insbesondere bevorzugt 0 bis 10,
- f: = 0 bis 20, bevorzugt 0 bis 10, insbesondere bevorzugt 0,
mit der Maßgabe, dass a + b + c +d ≥ 2 ist,
- R³: unabhängig voneinander gleiche oder verschiedene Alkylreste mit 1 bis 30 Kohlenstoffatomen, oder gleiche oder verschiedene Arylreste mit 6 bis 30 Kohlenstoffatomen oder gleich oder verschiedene Reste -OH oder -OR⁴, bevorzugt Methyl, Phenyl, -OH oder -OR⁴, insbesondere Methyl oder Phenyl,
- R⁴: unabhängig voneinander gleiche oder verschiedene Alkylreste mit 1 bis 12 Kohlenstoffatomen, oder gleiche oder verschiedene Arylreste mit 6 bis 12 Kohlenstoffatomen, bevorzugt Methyl, Ethyl, n-Propyl, Isopropyl, n-Butyl, sek-Butyl, isoButyl, Phenyl, insbesondere Methyl oder Phenyl
mit Verbindungen der Formel (III) und/oder Formel (IV) und/oder Polyether der Formel (V) im Sinne einer Hydrosilylierung

H₂C=CH-R⁵ ) Formel (III

HCC-R⁵ Formel (IV)

mit R⁵ = Alkylreste mit 1 bis 30 Kohlenstoffatomen, die auch von Heteroatomen unterbrochen sein können oder Arylreste mit 6 bis 30 Kohlenstoffatomen oder -OH, bevorzugt -OH oder -OR⁶, insbesondere Methyl oder Phenyl,
- R⁶: unabhängig voneinander gleiche oder verschiedene Alkylreste mit 1 bis 12 Kohlenstoffatomen, oder gleiche oder verschiedene Arylreste mit 6 bis 12 Kohlenstoffatomen, bevorzugt Methyl, Ethyl, n-Propyl, Isopropyl, n-Butyl, sek-Butyl, isoButyl, Phenyl, insbesondere Methyl oder Ethyl.

Bevorzugte Verbindungen entsprechend der Formel (III) bzw. (IV) sind Verbindungen mit endständigen Doppelbindungen, z. B. alpha-Olefine, alpha, omega-Olefine, allylgruppentragende Mono- und Polyole oder Allylgruppen tragende Aromaten. Insbesondere bevorzugte Verbindungen entsprechend der Formel (III) bzw. (IV) sind Ethen, Ethin, Propen, 1-Buten, 1-Hexen, 1-Dodecen, 1-Hexadecen, 1,3-Butadien, 1,7-Octadien, 1,9-Decadien, Styrol, Eugenol, Allylphenol, Undecylensäuremethylester, Allylalkohol, Allyloxyethanol, 1-Hexen-5-ol, Allylamin, Propargylalkohol, Propargylchlorid, Propargylamin oder 1,4-Butindiol.

Bevorzugte Polyether mit einer oder mehreren Mehrfachbindungen sind zum Beispiel allylfunktionelle Polyether. Besonders bevorzugte Polyether, die Kohlenstoff-Kohlenstoff-Mehrfachbindungen aufweisen, sind vorzugsweise solche der Formel (V),

CH₂=CHCH₂O(C₂H₄O)ₒ(C₂H₃(CH₃)O)ₚ(C₂H₃(C₂H₅)O)_{q}(C₂H₃(Ph)O)ᵣR⁷ Formel (V)

mit
R⁷ ein organischer Rest, der keine der Hydrosilylierung zugängliche Mehrfachbindung trägt, oder Wasserstoff, bevorzugt Wasserstoff, Alkylreste oder Carboxyreste, besonders bevorzugt Wasserstoff, Methyl, Butyl oder Acetyl, insbesondere bevorzugt Wasserstoff,
- o: = 0 bis 200, bevorzugt 0 bis 150, besonders bevorzugt 0 bis 100, insbesondere bevorzugt 0 bis 80
- p: = 0 bis 200, bevorzugt 0 bis 150, besonders bevorzugt 0 bis 100, insbesondere bevorzugt 0 bis 80,
- q: = 0 bis 100, bevorzugt 0 bis 30, besonders bevorzugt 0 bis 15, insbesondere 0.
- r: = 0 bis 100, bevorzugt 0 bis 30, besonders bevorzugt 0 bis 15, insbesondere 0.

Neben dem Einsatz einzelner Alkohole können außerdem Mischungen verschiedener Alkoholkomponenten eingesetzt werden. Anstelle der Alkohole können auch Thiole zum Einsatz kommen.

Vorzugsweise sind die Alkohole Methanol, Ethanol sowie polyvalente Alkohole mit 2 bis 6 Kohlenstoffatomen und/oder Phenol als alleinige Alkohole ausgeschlossen. Die genannten Alkohole können aber sehr wohl in Kombination mit weiteren Alkoholen vorliegen.

In einer weiteren bevorzugten Ausführungsform werden Aminoalkohole, ungesättigte Alkohole, die gegebenenfalls Heteroatome enthalten können, Phosphorsäureester, Siloxane, Polyole mit mindestens 7 Kohlenstoffatomen, gesättigte oder ungesättigte Hydroxycarbonsäuren, OH-funktionale Acrylate, OH-funktionale Polymere und oder Mischungen daraus als Alkohole in dem erfindungsgemäßen Verfahren eingesetzt.

In einer ganz besonders bevorzugten Ausführungsform werden *N*,*N*-Dimethylaminoethanol, 2-Allyloxyethanol, 5-Hexen-1-ol oder 2-Propen-1-ol als Alkohole eingesetzt.

Typischerweise werden 0,1 bis 10 mol Alkohol pro Mol Keton eingesetzt, bevorzugt 0,2 bis 5 mol Alkohol pro Mol Keton.

Zur Harzsynthese können alle bekannten Verfahren Anwendung finden. Üblicherweise wird in Gegenwart alkalischer Katalysatoren bei Temperaturen zwischen 40 und 120 °C kondensiert. Solche Umsetzungen sind z. B. in Ullmann's Encyclopädie der technischen Chemie Bd. 12, Verlag Chemie Weinheim, 1976, Seiten 547 bis 555 beschrieben.

Die Umsetzung in Verfahren gemäß der vorliegenden Erfindung wird vorzugsweise in einem basischen Milieu durchgeführt. Als Katalysatoren für die Polykondensation werden insbesondere stark basische Verbindungen verwendet. Bevorzugt einsetzbare basische Katalysatoren sind z. B. Alkalihydroxide und Alkalimethylate, wie z. B. Kaliumhydroxid, Natriumhydroxid, Kaliummethylat oder Natriummethylat. Weitere bevorzugt einsetzbare basische Katalysatoren sind quaternäre Ammoniumverbindungen wie Tetramethylammoniumhydroxid, Tetraethylammoniumhydroxid oder Tetrabutylammoniumhydroxid.

Die basischen Katalysatoren werden insbesondere in Mengen von ≥ 0,025 Mol-%, vorzugsweise ≥ 0,05 Mol-% und insbesondere in Mengen von ≥ 0,10 Mol-%, bezogen auf das Keton, in der Reaktionsmischung eingesetzt.

In einer weiteren bevorzugten Ausführungsform der vorliegenden Erfindung wird bei den erfindungsgemäßen Verfahren ein Phasentransferkatalysator der allgemeinen Formel 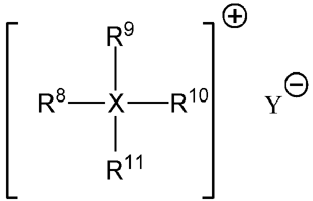 eingesetzt, wobei X ein Stickstoff- oder Phosphoratom ist, R⁸ ein Phenyl- oder ein Benzylrest ist, R⁹, R¹⁰, R¹¹ gleich oder verschieden und ausgewählt aus Alkylresten mit 1 bis 22 C-Atomen in der Kohlenstoffkette, Phenyl- oder Benzylresten sein können und Y das Anion einer anorganischen oder organischen Säure oder ein Hydroxidion bedeutet.

Für den Fall quaternärer Ammoniumsalze sind R⁹, R¹⁰, R¹¹ insbesondere Alkylreste mit 1 bis 22 C-Atomen, insbesondere solche mit 1 bis 12 C-Atomen, in der Kohlenstoffkette und/oder Phenyl- und/oder Benzylreste bevorzugt. Beispiele quaternärer Ammoniumsalze sind, Cetyldimethylbenzylammoniumchlorid, Tri-butylbenzylammoniumchlorid, Trimethylbenzylammoniumchlorid, Trimethylbenzyl-ammoniumjodid, Triethylbenzylammoniumchlorid oder Triethylbenzylammoniumjodid. Als quaternäre Phosphoniumsalze kommen z. B. Triphenylbenzylphosphoniumchlorid oder Triphenylbenzylphosphoniumjodid in Frage. Vorzugsweise wird Benzyltributylammoniumchlorid eingesetzt. Für quaternäre Phosphoniumsalze sind R⁹, R¹⁰, R¹¹ vorzugsweise Alkylreste mit 1 bis 22 C-Atomen und/oder Phenylreste und/oder Benzylreste. Als Anionen kommen solche starker anorganischer oder organischer Säuren in Frage, insbesondere Cl-, Br-, J-Anionen aber auch Hydroxide, Methoxide oder Acetate.

Der Phasentransferkatalysator wird vorzugsweise in Mengen von 0,01 bis 15 Massen-%, vorzugsweise von 0,1 bis 10,0 Massen-% und insbesondere in Mengen von 0,1 bis 5,0 Massen-%, bezogen auf das eingesetzte Keton, in den erfindungsgemäßen Verfahren eingesetzt.

Die Umsetzung kann darüber hinaus in einem Hilfslösemittel stattfinden. Als geeignete Lösemittel haben sich beispielsweise Methanol oder Ethanol erwiesen. Es ist jedoch auch möglich, Hilfslösemittel zu verwenden, die sich während der Reaktion ebenfalls umsetzen lassen. Ein Beispiel hierfür ist Methylethylketon. Besonders bevorzugt erfolgt die Kondensation gemäß der vorliegenden Erfindung in Gegenwart von Methanol und/oder Ethanol. Einige der vorab für die Funktionalisierung geeigneten Alkohole sind selbst mit z. B. Wasser kompatibel, so dass auf den Einsatz der vorab genannten Hilfslösemittel verzichtet werden kann.

Darüber hinaus ist auch die Zugabe von Lösungsvermittlern zwischen nukleophiler Komponente, also dem zur Funktionalisierung eingesetzten Alkohol, und wässrigem Reaktionsgemisch möglich, z. B. durch Einsatz von 1,4-Dioxan aber auch polymerer Löslichkeitsvermittler.

Die Umsetzung findet bei Temperaturen zwischen 40 °C und 120 °C statt, besonders bevorzugt zwischen 60 °C und 95 °C.

Durch Variation der Mengenverhältnisse von Aldehyd und Keton innerhalb der Grenzen der vorliegenden Erfindung lassen sich Harzeigenschaften wie Glasübergangstemperatur und Molgewicht einstellen.

In einer besonders bevorzugten Ausführungsform der vorliegenden Erfindung wird als Aldehyd 30-%ige wässrige Formaldehydlösung und als Keton Methylisobutylketon eingesetzt. Das bevorzugte molare Verhältnis von Keton zu Aldehyd beträgt in dieser Ausführungsform 1 : 1,9 bis 1 : 2,1. In der bevorzugten Ausführungsform wird als Phasentransferkatalysator Benzyltributylammoniumchlorid eingesetzt. Die bevorzugte eingesetzte Menge an Benzyltributylammoniumchlorid beträgt 0,1 bis 0,5 Massen-% bezogen auf Methylisobutylketon. In der bevorzugten Ausführungsform wird als Alkohol zur Funktionalisierung *N*,*N*-Dimethylaminoethanol verwendet. Das bevorzugte molare Verhältnis von *N*,*N*-Dimethylaminoethanol zu Methylisobutylketon beträgt 1:1 bis 2:1. Als basischer Katalysator wird bevorzugt Natronlauge als 50 Gewichts-%-ige Lösung in einer bevorzugten Menge größer 0,15 Mol-%, bezogen auf Methylisobutylketon, eingesetzt. Die Kondensation findet bevorzugt ohne Einsatz eines weiteren Hilfslösemittels statt. Das Produkt kann auf fachmännische Art und Weise durch Destillation, Separation und/oder Waschungen aufgearbeitet werden.

Gegebenenfalls kann ein geeigneter Katalysator zur Herstellung der erfindungsgemäßen Harze eingesetzt werden. Geeignet sind alle in der Literatur bekannten Verbindungen, die einen Einbau des Alkohols in die Polymerkette beschleunigen. Beispiele hierfür sind Amine wie z. B. 4-*N,N-*Dimethylaminopyridin oder Amidin-oder Guanidingruppen tragende Verbindungen, wie beispielsweise die Verbindung 1,8-Diazabicyclo[5.4.0]undec-7-en (DBU).

Ebenfalls Gegenstand der vorliegenden Erfindung sind funktionalisierte Harze, erhältlich mit dem vorab beschriebenen Verfahren.

Die erfindungsgemäßen Harze weisen allgemein Glasübergangstemperaturen von -80 °C bis +140 °C auf, bevorzugt von -70 °C bis +120 °C, bestimmt nach DIN 53765.

Die erfindungsgemäßen Harze haben relative Molmassen Mn zwischen 200 und 20000 g/mol, bevorzugt zwischen 300 und 10000 g/mol, besonders bevorzugt zwischen 350 und 5000 g/mol. Die relativen Molmassen werden durch Größenausschlußchromatographie (SEC) bestimmt. Dazu werden drei Säulen von Merck (PS 400, 250**7 mm, PS 40, 250*7 mm, und PS 1, 250**7 mm) mit einer Teilchengröße von 5 µm in Reihe kombiniert. Nach der Kalibration werden 20 µl der Kondensationsharzlösung in Tetrahydrofuran (C_{Kondensationsharz} = 20 mg/ml) bei 40 °C mit einem Rheodyne 7125 Injektor injiziert und mit einer Flußrate von 1 ml/min (HPLC Pumpe 510 von Waters) bei 40 °C mit entgastem Tetrahydrofuran als mobiler Phase und einem Differentialrefraktometer bei 40 °C (Model 410 von Waters) analysiert. Die Auswertung erfolgt nach Kalibration gegen Polystyrolstandards, die in der zuvor beschriebenen Weise durchgeführt wird. Polystyrolstandards (Standard 1 Mp 377400, Mp 96000, Mp 20650, Mp 1300, Mp 162; Standard 2 Mp 283300, Mp 50400, Mp 10850, Mp 2930, Mp 980; Standard 3 Mp 218800, Mp 68900, Mp 10050, Mp 1940, Mp 580; Mp = Molare Masse im Peakmaximum) sind beispielsweise bei Merck oder Polymer Laboratories kommerziell erhältlich.

Die erfindungsgemäßen Harze können unter Verwendung geeigneter Katalysatoren, welche die Hydrierung der Carbonylgruppe erlauben, zu Carbonyl-hydrierten Harzen umgewandelt werden. Ein geeignetes Verfahren hierzu ist in DE 870022 beschrieben. Enthält das Keton-Aldehyd-Harz aromatische Komponenten ist durch Verwendung geeigneter Katalysatoren die Herstellung von Kern- und Carbonyl-hydrierten Harzen möglich, wie beispielsweise in DE102006026758 beschrieben. Die Hydrierung der Carbonylgruppen führt zur Einführung (weiterer) Hydroxyfunktionalitäten. Durch die teilweise oder vollständige Carbonylhydrierung der Keton-Aldehydharze kann das Eigenschaftsprofil der Harze angepasst werden wie z. B. die Löslichkeitseigenschaften in polaren und unpolaren Lösemitteln.

Die erhaltenen funktionalisierten Harze können in Beschichtungsanwendungen verwendet werden, insbesondere handelt es sich bei den Beschichtungsanwendungen um Farben, Lacke oder Pigmentpasten.

Die erhaltenen funktionalisierten Harze eignen sich insbesondere für die Verwendung in Druckfarben. Hier hat sich gezeigt, dass sich durch den Einsatz der erfindungsgemäßen Harze eine Eigenschaftsverbesserung der Drucke erzielen lässt. Eigenschaftsverbesserungen werden beispielsweise in der Haftung der Beschichtung zum Substrat oder im Glanz erzielt.

Harze, welche durch den Einsatz ungesättigter Alkohole mit reaktiven Doppelbindungen funktionalisiert wurden, eignen sich zum Einsatz als radikalisch härtbare Harze. Zur Härtung derartiger Harze lassen sich thermische Initiatoren wie beispielsweise Azo-bis-isobutyronitril oder Photoinitiatoren, gegebenenfalls in Gegenwart geeigneter Photosensibilisatoren durch Bestrahlung verwenden. Dabei werden die Harze in polymere, unlösliche Harze überführen, die je nach Gehalt der ungesättigten Gruppen Elastomere bis Duroplaste ergeben.

Ein weiterer Gegenstand der vorliegenden Erfindung ist die Verwendung der erfindungsgemäßen Harze als Pigmentnetz- und/oder Dispergierharze, wobei es sich insbesondere um lösemittelhaltige Pigmentpasten handelt. Somit eignen sich die erfindungsgemäßen Harze als Anreibeharze für Feststoffanreibungen, beispielsweise auf Basis von Füllstoffen oder Pigmenten.

Zusammensetzungen enthaltend Harze gemäß der vorliegenden Erfindung gehören ebenfalls zum Gegenstand der vorliegenden Erfindung. Insbesondere enthalten die erfindungsgemäßen Zusammensetzungen zusätzlich Pigmente. In einer besonders bevorzugten Ausführungsform bestehen die Zusammensetzungen aus Harzen gemäß der vorliegenden Erfindung und Pigmenten.

Bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen und Biozid, Agrochemikalien und Pharmaka, wie zum Beispiel Fungizide.

Weitere bevorzugte Feststoffe sind anorganische und organische Pigmente. Beispiele für anorganische Pigmente sind Ruße, Titandioxide, Zinkoxide, Preußischblau, Eisenoxide, Cadmiumsulfide, Chrompigmente, wie zum Bei-spiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt. Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chi-nacridon-, Perylen-, Diketopyrrolopyrrol und Phtalocyaninpigmente. Weitere Beispiele für organische Pigmente werden in dem Buch "W. Herbst, K. Hunger, Industrial Organic Pigments, VCH, Weinheim (1993)" genannt.

Es hat sich gezeigt, dass eine breite Verträglichkeit der erfindungsgemäßen Harze mit weiteren Bestandteilen, bevorzugt Bindemitteln, von Beschichtungsstoffen und/oder Klebstoffen und/oder Dichtmassen besteht. Als Beschichtungsstoffe, in denen die erfindungsgemäßen Pigmentpräparationen bevorzugt eingebracht werden können, kommen alle dem Fachmann bekannten lösemittelhaltigen und lösemittelfreien Systeme in Betracht. Diese Systeme können beispielsweise physikalisch trocknend, oxidativ trocknend oder anderweitig reaktiv in 1 K- oder 2K-Lacken sein.

Beispiele für Bindemittel sind lang-, mittel- und kurzölige Alkyde, selbstvernetzende und 2-Komponenten Acrylate, Polyester-Melamin-Systeme, 2-Komponenten Polyurethane und 2 Komponenten Epoxide.

Somit ist die Verwendung von Zusammensetzungen gemäß der vorliegenden Erfindung zur Herstellung von Lacken und Druckfarben oder Drucklacken und Beschichtungsstoffen ebenfalls Gegenstand der vorliegenden Erfindung.

Die vorab beschriebenen Messmethoden gelten für alle Ausführungsformen der vorliegenden Erfindung. Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

OH-Zahlen wurden nach DIN 53240-2 bestimmt. Die angegebenen Viskositäten wurden mit einem Anton Paar Rotationsviskosimeter M102 und der Messgeometrie CP50/2 bei 23 ° C und einer Scherrate von 1/100s bestimmt.

### Beispiel 1 - Kondensationsharz aus Formaldehyd, Methylisobutylketon und 2-Allyloxyethanol

100,2 g Methylisobutylketon, 100,1 g Formaldehydlösung (30 Gew.-% in Wasser) und 234,9 g 2-Allyloxyethanol wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 20,0 g Natronlauge (50 Gew.-%) gestartet. Anschließend wurde die Reaktionsmischung bis zum Rückfluss aufgeheizt. Nach Erreichen des Rückflusses wurden 100,1 g einer Formaldehydlösung (30 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde dreimal mit Wasser gewaschen, wobei dem ersten Waschwasser 1 ml Eisessig zugefügt wurde. Abschließend wurde 60 min bei 165 °C und 40 mbar am Rotationsverdampfer destilliert. Die Jodzahl zeigt die Bildung eines En-funktionales Kondensationsharzes an.

### Iodzahl 36 g lod /100 g

Signale bei 5,2 und 5,8 ppm im 1 H NMR Spektrum, gemessen in CDCl₃ zeigen den Einbau der ungesättigten Komponente an.
Mn = 570 g/mol
Mw = 730 g/mol
OH-Zahl 12 mg KOH/ g
Glasübergangstemperatur -31 °C

### Beispiel 2 - Kondensationsharz aus Formaldehyd, Methylisobutylketon, Ethanol und Ethylenglykol

300,5 g Methylisobutylketon, 298,3 g Formaldehydlösung (30,2 Gew.-% in Wasser), 210 ml Ethylenglykol und 225 ml Ethanol wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 60,0 g Natronlauge (50 Gew.-%) gestartet. Anschließend wurde die Reaktionsmischung bis zum Rückfluss aufgeheizt. Nach Erreichen des Rückflusses wurden 298,3 g einer Formaldehydlösung (30,2 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde viermal mit Wasser gewaschen, wobei dem ersten Waschwasser 2 ml Eisessig zugefügt wurden. Abschließend wurde 60 min bei 165 °C und 40 mbar am Rotationsverdampfer destilliert. Es wurde ein OH-funktionales Kondensationsharz erhalten.

### OH-Zahl 50,5 mg KOH / g

Mn = 480 g/mol
Mw = 580 g/mol
Glasübergangstemperatur -18 °C
Viskosität (80 Gew.-% in Butylacetat / Methoxypropylacetat) bei 23 °C: 288 mPas

### Beispiel 3 - Kondensationsharz aus Formaldehyd, Methylisobutylketon und N,N-Dimethylethanolamin

300,5 g Methylisobutylketon, 298,3 g Formaldehydlösung (30,2 Gew.-% in Wasser), 507 g Dimethylethanolamin und 0,75 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 60,0 g Natronlauge (50 Gew.-%) gestartet. Anschließend wurde die Reaktionsmischung bis zum Rückfluss aufgeheizt. Nach Erreichen des Rückflusses wurden 298,3 g einer Formaldehydlösung (30,2 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde 16-mal mit Wasser gewaschen, wobei dem ersten Waschwasser 30 ml Eisessig zugefügt wurden. Abschließend wurde 60 min bei 165 °C und 40 mbar am Rotationsverdampfer destilliert. Es wurde ein Amin-funktionalisiertes Harz erhalten.

### Aminzahl: 27 mg KOH/g

Mn = 620 g/mol
Mw = 910 g/mol
OH-Zahl 16,6 mg KOH / g
Glasübergangstemperatur 14°C
Viskosität (80 Gew.-% in Butylacetat / Methoxypropylacetat) bei 23 °C: 3529 mPas

### Beispiel 4 - Kondensationsharz aus Formaldehyd, Methylisobutylketon und Glycerin

400,6 g Methylisobutylketon, 397,7 g Formaldehydlösung (30,2 Gew.-% in Wasser), 914,3 g Glycerin und 1 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 80,0 g Natronlauge (50 Gew.-%) gestartet. Anschließend wurde die Reaktionsmischung bis zum Rückfluss aufgeheizt. Nach Erreichen des Rückflusses wurden 397,7 g einer Formaldehydlösung (30,2 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde viermal mit Wasser gewaschen, wobei dem ersten Waschwasser 2 ml Eisessig zugefügt wurden. Abschließend wurde 60 min bei 165 °C und 40 mbar am Rotationsverdampfer destilliert. Es wurde ein OH-funktionales Kondensationsharz erhalten.

### OH-Zahl 134,8 mg KOH/ g

Mn = 510 g/mol
Mw = 630 g/mol
Glasübergangstemperatur -15°C
Viskosität (80 Gew.-% in Butylacetat / Methoxypropylacetat) bei 23 °C: 664 mPas

### Beispiel 5 - Kondensationsharz aus Formaldehyd, Methylisobutylketon, 1,4-Dioxan und Ethylenglykol

400,6 g Methylisobutylketon, 397,7 g Formaldehydlösung (30,2 Gew.-% in Wasser), 100 ml Dioxan, 280 ml Ethylenglykol und 1 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 80,0 g Natronlauge (50 Gew.-%) gestartet. Anschließend wurde die Reaktionsmischung bis zum Rückfluss aufgeheizt. Nach Erreichen des Rückflusses wurden 397,7 g einer Formaldehydlösung (30,2 Gew.-% in Wasser) innerhalb von 90 Minuten hinzugegeben, danach wurde die Reaktionsmischung 4,5 Stunden unter Rückfluss gehalten. Dann wurde der Rührer abgeschaltet. Nach Separation der Phasen wurde die wässrige Phase abgetrennt. Das Rohprodukt wurde viermal mit Wasser gewaschen, wobei dem ersten Waschwasser 4 ml Eisessig zugefügt wurden. Abschließend wurde 60 min bei 165 °C und 40 mbar am Rotationsverdampfer destilliert. Es wurde ein OH-funktionales Kondensationsharz erhalten.

### OH-Zahl 46,6 mg KOH / g

Mn = 550 g/mol
Mw = 710 g/mol
Glasübergangstemperatur -7 °C
Viskosität (80 Gew.-% in Butylacetat / Methoxypropylacetat) bei 23 °C: 757 mPas

### Beispiel 6 - Kondensationsharz aus Formaldehyd, Methylisobutylketon, Acetophenon und Ethylenglykol

195,3 g Methylisobutylketon, 126,2 g Acetophenon, 193,9 g Formaldehydlösung (30,2 Gew.-% in Wasser), 840 ml Ethylenglykol und 0,8 g Benzyltributylammoniumchlorid wurden in einem Dreihalskolben mit Rührer, Rückflusskühler und Thermofühler in Stickstoffatmosphäre vorgelegt. Nach Erwärmen auf 40 °C wurde die Reaktion durch Zugabe von 60,0 g Natronlauge (50 Gew.-%) gestartet. Anschließend wurde die Reaktionsmischung auf 80 °C aufgeheizt. Nach Erreichen des Rückflusses wurden 298,3 g einer Formaldehydlösung (30,2 Gew.-% in Wasser) innerhalb von 90 Minuten hinzugegeben, danach wurde die Reaktionsmischung 4,5 Stunden bei 80 °C gehalten. Dann wurde der Rührer abgeschaltet. Nach Separation der Phasen wurde die wässrige Phase abgetrennt. Das Rohprodukt wurde fünfmal mit Wasser gewaschen, wobei dem zweiten Waschwasser 5 ml Eisessig zugefügt wurden. Abschließend wurde 60 min bei 165 °C und 40 mbar am Rotationsverdampfer destilliert. Es wurde ein OH-funktionales Kondensationsharz erhalten.

### OH-Zahl 75,1 mg KOH / g

Mn = 540 g/mol
Mw = 670 g/mol
Glasübergangstemperatur 7 °C
Viskosität (80 Gew.-% in Butylacetat / Methoxypropylacetat) bei 23 °C: 2308 mPas

### Beispiel 7 - Umsetzung des OH-funktionalen Harzes aus Beispiel 6 mit IPDI

225,1 g Harz wurden vorgelegt und auf 80°C aufgeheizt. Anschließend wurden 0,29 g BorchiKat 22 zugegeben und im Anschluss 30,0 g Isophorondiisocyanat in 7 min zugetropft. Nach Erwärmen der Reaktionsmischung auf 120°C wurde 1,5 h bei dieser Temperatur bis zum vollständigen Isocyanat-Umsatz gerührt. Es wurde ein klares, sprödes Harz erhalten.

### OH-Zahl 13,0 mg KOH / g

### NCO-Gehalt 0 %

Mn = 820 g/mol
Mw = 1700 g/mol
Glasübergangstemperatur 34 °C
Schmelzpunkt 61 °C
Viskosität (80 Gew.-% in Butylacetat / Methoxypropylacetat) bei 23 °C: 71,3 Pas

### Beispiel 8 - Kondensationsharz aus Formaldehyd, Methylethylketon und Ethylenglykol

497,2 g Formaldehydlösung (30,2 Gew.-% in Wasser) und 700 ml Ethylenglykol wurden in einem Dreihalskolben mit Rührer, Rückflusskühler und Thermofühler in Stickstoffatmosphäre vorgelegt. Nach Erwärmen auf 40 °C wurde 20,0 g Natronlauge (50 Gew.-%) zugegeben und im Anschluss 180,3 g Methylethylketon in 1,5 Stunden hinzugetropft. Die Reaktionsmischung wurde auf 100 °C aufgeheizt und 4,5 Stunden unter Rückfluss gehalten. Dann wurde der Rührer abgeschaltet. Nach Separation der Phasen wurde die wässrige Phase abgetrennt. Das Rohprodukt wurde viermal mit Wasser gewaschen, wobei dem zweiten Waschwasser 2 ml Eisessig zugefügt wurden. Abschließend wurde 60 min bei 165 °C und 40 mbar am Rotationsverdampfer destilliert. Es wurde ein OH-funktionales Kondensationsharz erhalten.

### OH-Zahl 98,1 mg KOH / g

Mn = 640 g/mol
Mw = 1000 g/mol
Glasübergangstemperatur 57 °C

### Anwendungsbeispiel

### Lackherstellung:

Vorab wurde eine **Premix Wax Dilution** hergestellt (Tabelle 1). Hierfür wurden Ecocell 1/4 AS (28,6% in Ethylacetat, Firma Nitroquimica, 38 g), Vestowax H2050 SF (30 g, Firma Evonik Industries AG) und Ethanol (32 g) nacheinander unter dem Dissolver (Dispermat LC 75, VMA Getzmann) in einer 250 ml Glasflasche vermischt. Die Premix Wax Dilution wurde nach Zugabe der Komponenten 2 Stunden mit einer Rührgeschwindigkeit von 2500-3000 U/min dispergiert.

**Tabelle 1 Premix Wax Dilution**

| **Komponente** | **Zusammensetzung in %** |
|---|---|
| Ecocell 1/4 AS (28,6% in Ethylacetat) | 38 |
| Vestowax H 2050 SF | 30 |
| Ethanol | 32 |
| **Summe** | **100** |

Das Amin-funktionale Harz aus Beispiel 3 (4,0 g) wurde in einer 250 ml Glasflasche in Ethylacetat (10,3 g) gelöst. Im Anschluss wurde Ecocell 1/4 AS (28,6% in Ethylacetat, 18,70 g), Tego Dispers 710 (4,00 g, Firma Evonik Industries AG), Ethanol (7,00 g), Hexamoll DINCH (4,5 g, BASF SE) und das Pigment Special Black 4 (10,0 g, Orion) zur Lösung des Harzes aus Beispiel 3 zugegeben. Im Anschluss wurden ca. 59 g Glasperlen Ø 3 mm hinzugegeben, die Flasche wurde gut verschlossen und in den Rüttler gestellt. Der Lack wurde 1 Stunde gerüttelt. (**Schritt 1, Tabelle 2**)

Anschließend wurden nochmals Ecocell 1/4 AS (28,6% in Ethylacetat) (11,3 g), Ethylacetat (3,70 g), Premix Wax Dilution (6,70 g), Ethanol (13,3 g)und Methoxypropanol (6,50 g)hinzugewogen. Die Flasche wurde wieder gut verschlossen und für 15 Minuten auf einem Rüttler vermischt. Der Lack wurde mithilfe eines Schnellsiebes von den Glasperlen getrennt und am Folgetag appliziert. (**Schritt 2, Tabelle 2**)

Zu Vergleichszwecken wurde ein Nitrocelluloselack ohne erfindungsgemäßes Harz aus Beispiel 3 nach gleicher Vorgehensweise angesetzt. Zur Herstellung einer Vergleichsprobe mit equivalentem Harzgehalt wurden die Mengen Ecocell 1/4 AS und Ethylacetat in Schritt 1 entsprechend angepasst. Die Einsatzmengen der Komponenten sind Tabelle 2 zusammengefasst.

**Tabelle 2: Zusammensetzungen der Nitrocelluloselacke**

| **Komponente** | **Vergleichsprobe ohne erfindungsgemäßes Harz** | **Zusammensetzung mit erfindungsgemäßem Harz aus Beispiel 3** |
|---|---|---|
| | **Zusammensetzung in %** | **Zusammensetzung in %** |
| **Schritt 1** | | |
| Ecocell1/4 AS (28% in Ethylacetat) | 32,7 | 18,7 |
| TEGO Dispers 710 | 4 | 4 |
| Ethanol | 7 | 7 |
| Amin-Harz (Beispiel 3) | 0 | 4 |
| Special Black | 10 | 10 |
| Ethylacetat | 0,3 | 10,3 |
| Hexamoll DINCH | 4,5 | 4,5 |

| **Schritt 2** | | |
|---|---|---|
| Ecocell 1/4 AS (28,6% in Ethylacetat) | 11,3 | 11,3 |
| Ethylacetat | 3,7 | 3,7 |
| premix wax dilution (vgl. Tabelle 2) | 6,7 | 6,7 |
| Ethanol | 13,3 | 13,3 |
| Methoxypropanol | 6,5 | 6,5 |
| **Summe** | **100** | **100** |

### Applikation:

Eine unbehandelte PP-Folie wurde in einem Corona-Gerät (Arcotec, Mönsheim, Coronagenerator Typ CG061-2) behandelt. Anschließend wurde ca. 1 g des Lacks auf die Corona-behandelte Folie gegeben und mit einem 13,7 µm Rakel appliziert. Die Trocknungszeit des Lackes betrug 1 - 2 Minuten.

Nach 5 Minuten wurde die Tesafestigkeit bestimmt um die Beschichtung auf deren Haftungseigenschaft zu beurteilen. Marktüblich wird die Tesafestigkeit in Anlehnung an die ASTM D3359 folgendermaßen durchgeführt. Die beschichtete PP-Folie wird auf einen harten, glatten Untergrund gelegt. Ein Tesastreifen (Typ 4104, Beiersdorf, 20 mm Breite, mindestens 30 mm weit) wird quer zur Laufrichtung auf den Prüfling geklebt und gleichmäßig angedrückt. Unmittelbar nach dem Aufkleben wird der Klebestreifen ruckartig im Winkel von 90° abgezogen. Die Tesafestigkeit wird mit Ziffern von 1 bis 5 beurteilt:
5 = Beschichtung zieht nicht ab
4 = Beschichtung zieht an einigen Stellen punktförmig ab
3 = Beschichtung zieht an einzelnen Stellen deutlich ab
2 = Beschichtung zieht in größeren Flächen ab
1 = Beschichtung zieht vollständig ab

Ergebnisse sind in Tabelle 3 zusammengestellt.

Nach zwei Stunden Trockenzeit wurde der Glanz nach DIN EN ISO 2813 gemessen. Das erfindungsgemäße Harz aus Beispiel 3 zeichnet sich durch eine Haftungsverbesserung sowie durch eine Erhöhung der Glanzwerte aus. Die Ergebnisse zu Glanz angegeben in Glanzeinheiten (GE) sind ebenfalls in Tabelle 3 zusammengefasst.

| Tabelle 3: Auswertung der mit Nitrocelluloselack beschichteten PP Folie. | **PP-Folie nach Beschichtung mit Nitrocelluloselack ohne erfindungsgemäßes Harz (zu Vergleichszwecken)** | **PP-Folie nach Beschichtung mit Nitrocelluloselack unter Verwendung von Harz aus Beispiel 3** |
|---|---|---|
| Glanz 20° [GE] | 1,5 | 1,8 |
| Glanz 60° [GE] | 15,7 | 19,4 |
| Glanz 85° [GE] | 25,7 | 38,3 |
| Tesa-Abriss | 1 | 4 |

## Patentansprüche

1. Verfahren zur Herstellung funktionalisierter Harze umfassend die Kondensation von aliphatischen Ketonen und Aldehyden in Gegenwart mindestens eines Alkohols, wobei der Alkohol kovalent in das Harz eingebunden wird.

2. Verfahren gemäß Anspruch 1, **dadurch gekennzeichnet, dass** die Ketone ausgewählt sind aus Aceton, Acetophenon, ortho-, meta oder para-Phenylacetophenon, Methylethylketon, 3-Pentanon, 2-Heptanon, 3-Heptanon, 4-Heptanon, 2-Oktanon, 3-Oktanon, 2-Undecanon, 5-Methylhexan-2-on (Methylisoamylketon) oder 4-Methylpentan-2-on (Methylisobutylketon), Cyclopentanon, Cyclododecanon, Mischungen aus 2,2,4- und 2,4,4-Trimethylcyclopentanon, Cycloheptanon, Cyclooctanon, Cyclohexanon, o-, m- oder p-Methoxyacetophenon, o-, m- oder p-[*N*,*N*-Dialkylaminophenyl]ethanon, Rheosmin, 4-(4-Hydroxy-3-metoxyphenyl)-2-butanon, Lävulinsäure und deren Derivate sowie alkylsubstituierte Cyclohexanone, wie 4-tert.-Amylcyclohexanon, 2-sek. Butylcyclohexanon, 2-tert.-Butylcyclohexanon, 4-tert.-Butylcyclohexanon, 2-Methylcyclohexanon und 3,3,5-Trimethylcyclohexanon oder Dione oder Mischungen hieraus.

3. Verfahren gemäß Anspruch 1 oder 2, **dadurch gekennzeichnet, dass** die Aldehyde ausgewählt sind aus der Gruppe bestehend aus Formaldehyd, Acetaldehyd, n-Butyraldehyd und/oder iso-Butyraldehyd, Valerianaldehyd sowie Dodecanal oder Mischungen daraus.

4. Verfahren gemäß einem oder mehreren der Ansprüche 1 bis 3, **dadurch gekennzeichnet, dass** die Ketone ausgewählt sind aus der Gruppe bestehend aus Aceton, Methylethylketon, 2-Heptanon, 3-Heptanon, 4-Heptanon, 2-Oktanon, 3-Oktanon, 2-Undecanon, 5-Methylhexan-2-on oder 4-Methylpentan-2-on oder Mischungen daraus.

5. Verfahren gemäß einem oder mehreren der Ansprüche 1 bis 4, **dadurch gekennzeichnet, dass** das molare Aldehyd- zu Keton-Verhältnis im Bereich von 1:1 bis 3,5:1 liegt.

6. Verfahren gemäß einem oder mehreren der Ansprüche 1 bis 5, **dadurch gekennzeichnet, dass** der Alkohol ausgewählt ist aus gesättigten oder ungesättigten aliphatischen oder cycloaliphatischen, aromatischen Mono-, Di- oder Polyolen oder linearen oder verzweigten OH-funktionalen Polymeren.

7. Verfahren gemäß einem oder mehreren der Ansprüche 1 bis 6, **dadurch gekennzeichnet, dass** die Alkohole Methanol, Ethanol sowie polyvalente Alkohole mit 2 bis 6 Kohlenstoffatomen und/oder Phenol als alleinige Alkohole ausgeschlossen sind.

8. Verfahren gemäß einem oder mehreren der Ansprüche 1 bis 7, **dadurch gekennzeichnet, dass** 0,1 bis 10 mol Alkohol pro Mol Keton eingesetzt werden.

9. Verfahren gemäß einem oder mehreren der Ansprüche 1 bis 8, **dadurch gekennzeichnet, dass** in Gegenwart alkalischer Katalysatoren bei Temperaturen zwischen 40 und 120 °C kondensiert wird.

10. Verfahren gemäß einem oder mehreren der Ansprüche 1 bis 9, **dadurch gekennzeichnet, dass** als Aldehyd 30-%ige wässrige Formaldehydlösung und als Keton Methylisobutylketon eingesetzt wird.

11. Verfahren gemäß Anspruch 10, **dadurch gekennzeichnet, dass** als Alkohol *N*,*N-*Dimethylaminoethanol verwendet wird.

12. Funktionalisierte Harze, erhältlich mit einem Verfahren gemäß einem oder mehreren der Ansprüche 1 bis 11.

13. Funktionalisierte Harze gemäß Anspruch 12, **dadurch gekennzeichnet, dass** die Harze Glasübergangstemperaturen von -80 °C bis +140 °C aufweisen, bestimmt nach DIN 53765.

14. Verwendung von funktionalisierten Harzen gemäß Anspruch 12 oder 13 in Beschichtungsanwendungen.

15. Verwendung gemäß Anspruch 14, **dadurch gekennzeichnet, dass** es sich bei den Beschichtungsanwendungen um Farben, Lacke oder Pigmentpasten handelt.
